# EUROPEAN PATENT APPLICATION

(11) **EP 4 763 508 A1**
(43) Date of publication of application: **24.06.2026**
(21) Application number: 25224400.9
(22) Date of filing: 17.12.2025
(51) Int. Cl.: B32B 3/30, B32B 5/02, B32B 27/08, B32B 27/30, B32B 27/32, B32B 27/34, B32B 27/36, B32B 27/12, B32B 7/12, B29C 51/00

(54) **MULTILAYER MATERIAL FOR COVERING MACHINES, APPARATUSES AND VEHICLES, AND METHOD FOR OBATINING THE SAME**

(30) Priority: 18.12.2024 IT 202400028803
(71) Applicant: GIEMME S.R.L., 41011 Campogalliano (MO) (IT)
(72) Inventor: CORRADINI, Marco, 41011 CAMPOGALLIANO MO (IT)
(74) Representative: Modiano, Micaela Nadia

(57) **Abstract**

A multilayer material (1) for the provision of structural cladding/covering components for machines, apparatuses and vehicles, which comprises a finishing layer (2) comprising at least one thermoplastic polymer associated by interposition of an adhesive material (3) with a reinforcement layer (4) made of composite material comprising a thermoplastic matrix in which reinforcement fibers are dispersed. The adhesive material (3) is adapted to penetrate the surface irregularities of the reinforcement layer (4) and/or of the finishing layer (2).

## Description

The present invention relates to a multilayer material for the provision of structural cladding/covering components for machines, apparatuses and vehicles, an obtainable structural component, and the related processing method.

With particular, but not exclusive, reference to the sector of constructing works vehicles, industrial apparatuses and vehicles, ongoing research is underway aimed at obtaining structural cladding/covering components that are lightweight, dimensionally stable over time and under all weather conditions, and that are also obtainable with economically advantageous processing times, to be used in substitution of traditional components made of sheet metal.

Such structural components are generally used as parts of bodywork, housings, covers or casings for housing/covering components.

The known technologies for providing such structural components generally involve the use of thermosetting plastic materials.

For example components are known which are obtained by means of a technology called S-RIM (Structural Reaction Injection Molding) which entails injecting two different liquid monomers, generally a polyol and an isocyanate, into a mold, in which a mat or a netting of glass fiber has been preliminarily positioned, where the monomers react and transform into a solid plastic material, generally polyurethane, reinforced with glass fibers.

Alternatively, molding using LFI (Long Fiber Injection) technology is known, which involves the compression molding of polyurethane resins and chopped glass fibers sprayed inside an open mold.

Components are also known which are obtained by means of a technology called RTM (Resin Transfer Molding), which are substantially composed of polyurethane resin or epoxy resin injected under vacuum into a mold, into which a preform of reinforcement fibers has been preliminarily introduced.

Finally, components are known which are obtained using the RIM (Reaction Injection Molding) technology for molding thermosetting resins based on dicyclopentadiene (DCPD), more commonly known by the trade name Telene^{®}.

All the known technologies entail a considerable duration of the processing cycle, since it is necessary to wait for the hardening time of the plastic material used before extracting the component from the mold. Moreover, in some cases, after extraction from the mold, the components need to be positioned on special templates in order to prevent them from deformation.

Furthermore the components obtained using the technologies described above cannot be recycled in the traditional sense, in that once the material has hardened through the polymerization process, it cannot be remelted down or reused. In fact, during the hardening process a permanent cross-linked chemical structure is formed, which renders the material stable, but not reversible.

The aim of the present invention is to provide a multilayer material for the provision of structural cladding/covering components for machines, apparatuses and vehicles, an obtainable structural component, and a related processing method that are capable of improving the known art in one or more of the above-mentioned aspects.

Within this aim, an object of the invention is to provide a multilayer material that offers contained processing times and does not require special equipment, so as to be economically advantageous.

Another object of the present invention is to provide a multilayer material that is recyclable, so as to contain the environmental impact deriving from its disposal.

Another object of the present invention is to provide a multilayer material that has a weight per surface unit, and a consequent mechanical strength, that is adaptable on the basis of the requirements of the specific application.

Another object of the present invention is to provide a multilayer material that offers mechanical strength characteristics that are at least equal to those of conventional sheet metal, but with a considerably lower weight (approximately 20-30% lighter).

Another object of the present invention is to provide a multilayer material that is stable over time and under varied environmental conditions.

Another object of the present invention is to overcome the drawbacks of the known art in a manner different from any existing solutions.

Not least an object of the invention is to provide a multilayer material for the provision of structural cladding/covering components for machines, apparatuses and vehicles, an obtainable structural component, and a related processing method that are highly reliable, easy to implement, and low cost.

This aim and these and other objects which will become more apparent hereinafter are achieved by a multilayer material for the provision of structural cladding/covering components of apparatuses, machines and vehicles according to claim 1, optionally provided with one or more of the characteristics of the dependent claims 2-7.

This aim and these and other objects which will become more apparent hereinafter are also achieved by a structural cladding/covering component of apparatuses, machines and vehicles according to claim 8, optionally provided with one or more of the characteristics of the dependent claims 9-13.

This aim and these and other objects which will become more apparent hereinafter are also achieved by a processing method for obtaining a structural cladding/covering component of apparatuses, machines and vehicles according to claim 14 or 15.

Further characteristics and advantages of the invention will become more apparent from the description of some preferred, but not exclusive, embodiments of a multilayer material for the provision of structural cladding/covering components of machines, apparatuses and vehicles, of an obtainable structural component, and of a related processing method according to the invention, which are illustrated, by way of non-limiting example, in the accompanying drawings wherein:
- Figure 1 is an exploded view of a first embodiment of a multilayer material according to the invention;
- Figure 2 is a cross-sectional view of the multilayer material of Figure 1;
- Figures 3 and 4 are cross-sectional views of respective variants of the material of Figure 2;
- Figure 5 is an exploded view of a second embodiment of the multilayer material according to the invention;
- Figure 6 is an exploded view of a third embodiment of the multilayer material according to the invention;
- Figure 7 shows a first embodiment of a structural cladding/covering component according to the invention;
- Figure 8 shows a second embodiment of some structural cladding/covering components according to the invention;
- Figure 9 shows a third embodiment of a structural cladding/covering component according to the invention.

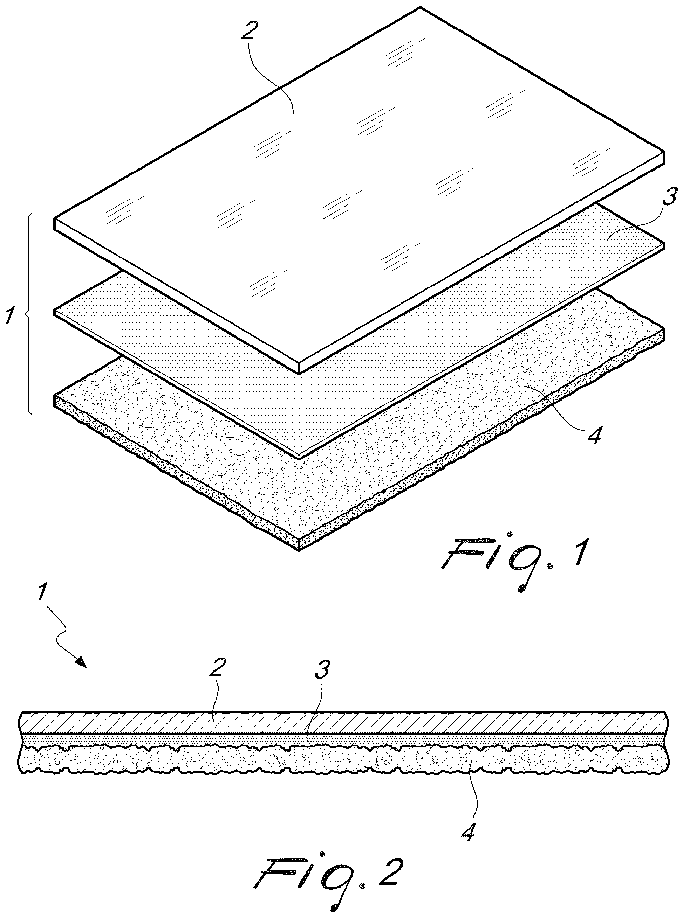

With reference to Figures 1-6, the reference numeral 1 generally designates a multilayer material for the provision of structural cladding/covering components for works vehicles, industrial apparatuses and vehicles.

Such material 1 comprises a finishing layer 2 comprising at least one thermoplastic polymer associated by interposition of an adhesive material 3 with a reinforcement layer 4 made of composite material comprising a thermoplastic matrix in which reinforcement fibers are dispersed. The adhesive material 3 is adapted to penetrate the surface irregularities of the reinforcement layer 4 and/or of the finishing layer 2.

The term "layer" means a three-dimensional body with an extension along two non-parallel dimensions that is much greater than the extension along a third dimension, which is at right angles to the first two dimensions, so as to define two mutually opposite main faces of greater extension connected by a thin perimetric band which defines the thickness of the body itself.

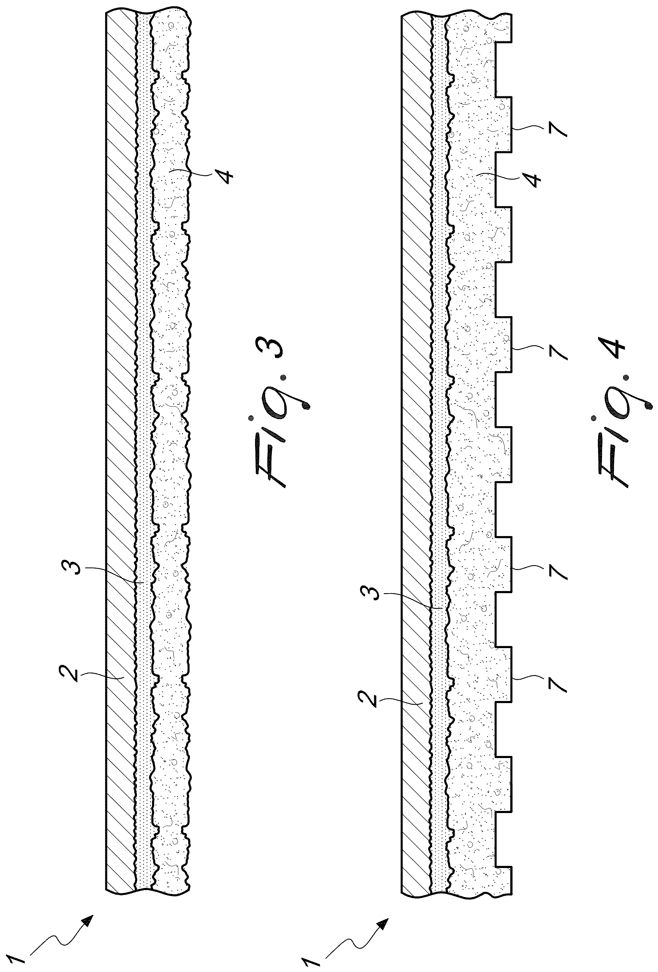

The finishing layer 2 comprises an exposed surface which is intended to remain exposed in use, and a rear surface, arranged on the opposite side therefrom. The rear surface of the finishing layer 2 is directed toward the reinforcement layer 4. Such rear surface of the finishing layer 2 is preferably rough. A preliminary processing can be executed on the rear surface of the finishing layer 2 to increase the surface roughness and, therefore, favor the penetration of the adhesive material 3 and the grip on the reinforcement layer 4 (Figure 3). Such preliminary processing can occur, for example, by means of flaming, plasma treatment, or abrasion.

The thermoplastic polymer included in the finishing layer 2 is preferably selected from the group comprising acrylonitrile butadiene styrene (ABS), polymethylmethacrylate (PMMA), polycarbonate (PC) or polypropylene (PP).

Preferably the finishing layer 2 has a thickness comprised between 0.5mm and 20mm.

The thermoplastic matrix of the composite material incorporated in the reinforcement layer 4 preferably comprises at least one of polypropylene (PP), polycarbonate (PC) or polyamide (PA).

The reinforcement fibers included in such composite material are preferably chosen from the group comprising glass fibers, flax fibers, natural fibers.

In the preferred embodiment, the composite material comprises up to 60% by weight of reinforcement fibers, so as to confer adequate mechanical strength characteristics on the reinforcement layer 4.

The reinforcement layer 4 generally has a thickness comprised between 0.5mm and 15mm.

The reinforcement layer 4 can be contoured to define a plurality of ribs 7 which protrude from the opposite side of the finishing layer 2 in order to increase the mechanical strength characteristics conferred on the material 1 (Figure 4).

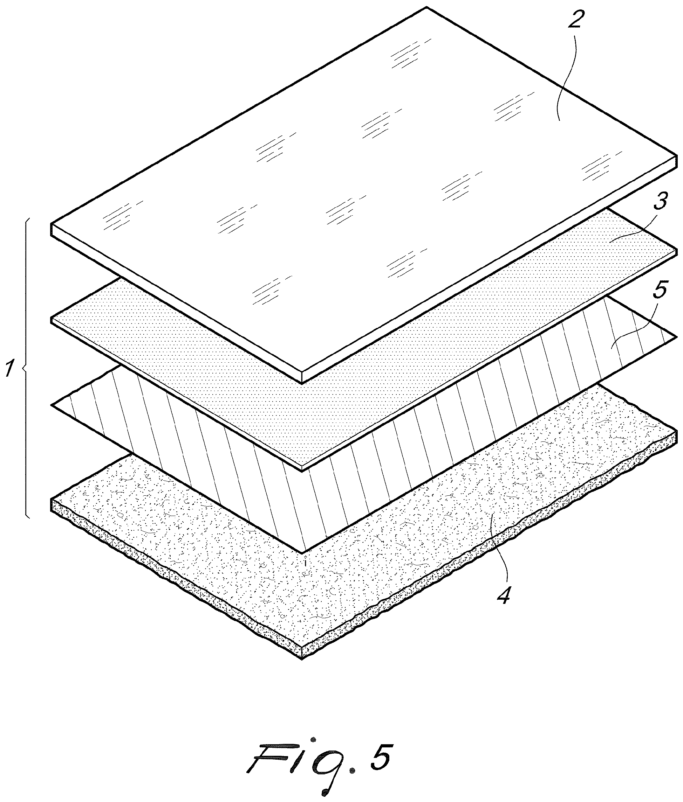

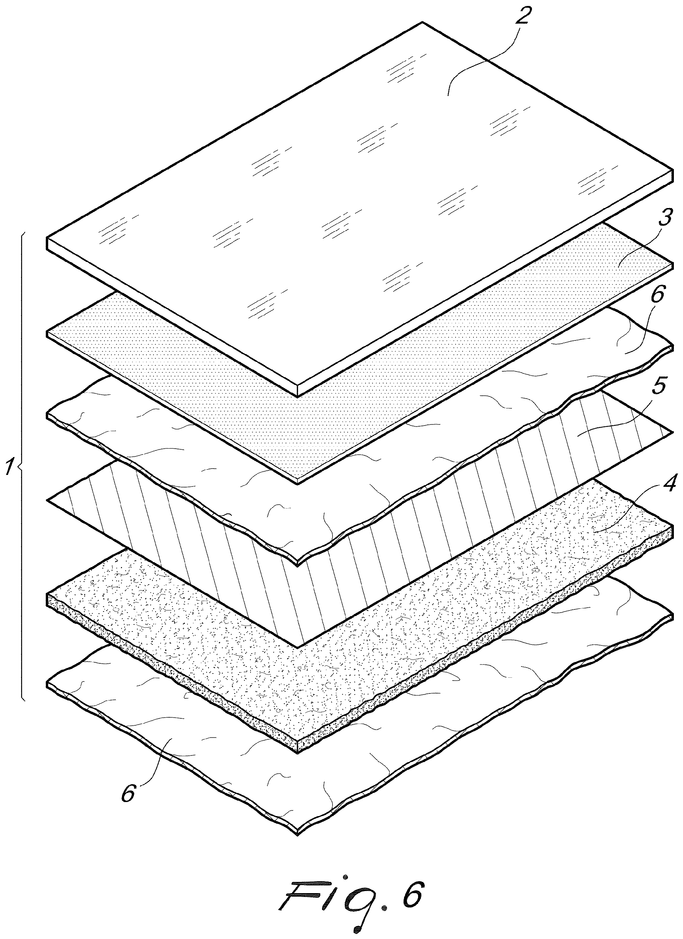

In addition at least one unidirectional ribbon 5, known as UD tape, can be associated with the reinforcement layer 4 in order to increase its mechanical strength characteristics (Figures 5 and 6). Preferably the at least one unidirectional ribbon 5 is associated with the reinforcement layer 4 at the main surface directed toward the finishing layer 2.

One or more unidirectional ribbons 5 can be mutually superimposed in a unidirectional or multidirectional configuration, according to the stress that the material is intended to withstand.

Furthermore, at least one layer of non-woven fabric 6 can be associated with the reinforcement layer 4, on one or both of the main faces (Figure 6).

The at least one layer of non-woven fabric 6 can be on the main face of the reinforcement layer 4 directed toward the finishing layer 2 in order to increase the grip of the adhesive material 3 by virtue of the porosity of the material.

The at least one layer of non-woven fabric 6 can be on the main face of the reinforcement layer 4 directed away from the finishing layer 2 as an outer covering.

Furthermore, the use of non-woven fabric makes it possible to confer acoustic isolation characteristics on the material 1.

The adhesive material 3 preferably comprises a thermoplastic resin adhesive.

The stretch modulus of the thermoplastic resin adhesive is preferably higher than 200MPa with an elongation at break comprised between 100% and 400%. These characteristics of the adhesive material 3 confer flexibility, and a capacity to absorb deformations, on the material 1. The use of thermoplastic resin adhesives makes it possible to obtain a strong adhesion between the finishing layer 2 and the reinforcement layer 4 by virtue of their capacity for wetting and for interfacing with thermoplastic materials. Furthermore, the use of thermoplastic resin adhesives favors the recyclability of the material 1.

However, it is also possibility for the adhesive material 3 to comprise a thermosetting adhesive or another adhesive.

By way of using the material 1 it is possible to obtain a structural cladding/covering component 10 for works vehicles (e.g. earth-moving machines or agricultural machines), industrial apparatuses (e.g. plant and equipment for industries in various technological sectors) and vehicles (e.g. automobiles and recreational vehicles). Such component 10 can be intended for use for example as a cover, hood or other bodywork component, as a part of a housing or other containment/covering structure.

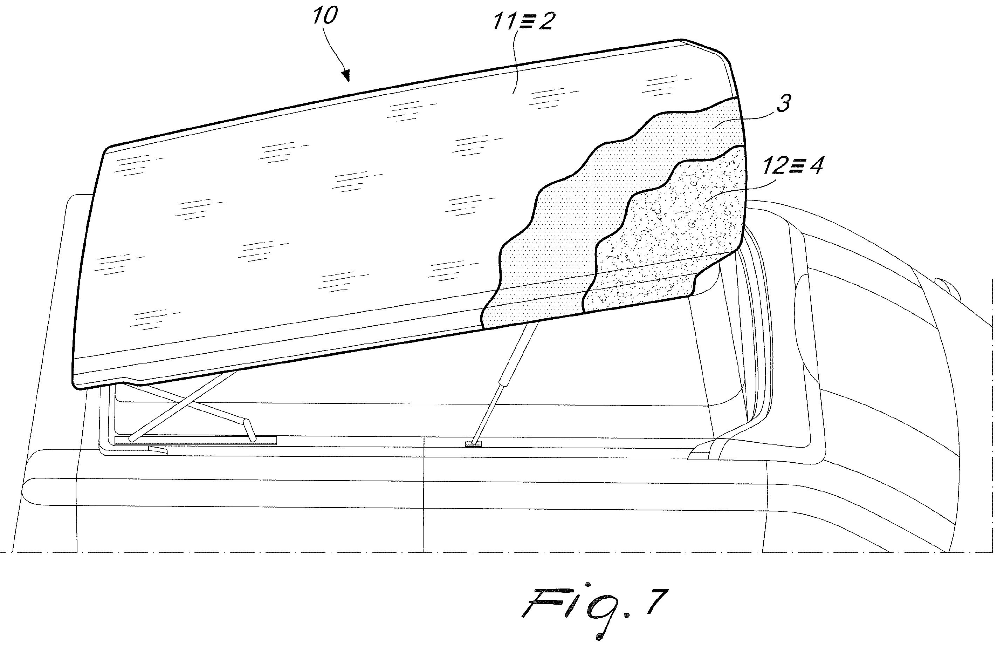

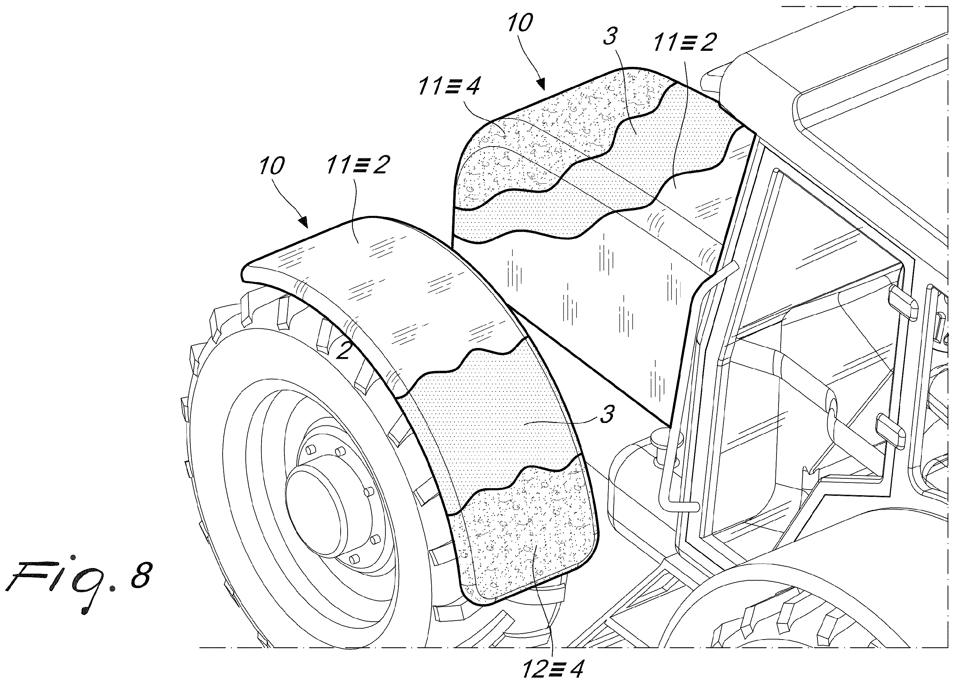

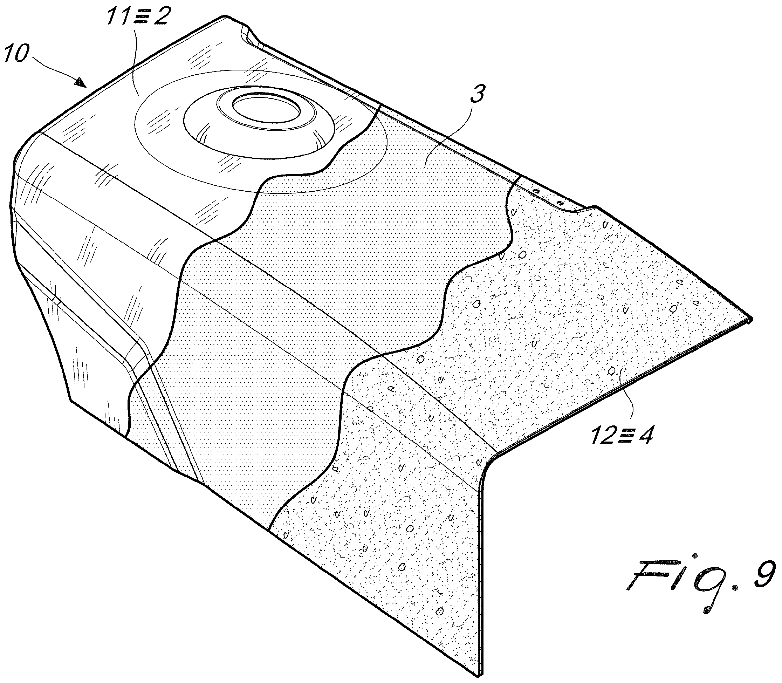

For example, Figure 7 shows a component 10 of the type of an expanding roof of a recreational vehicle, Figure 8 shows two components 10 that constitute a hood and a mudguard of a tractor, and Figure 9 shows a component 10 that constitutes a hood/cover for a works vehicle or for an industrial apparatus.

The structural component 10 comprises:
- a first article 11 which has a first adhesion surface 11a and is provided by thermoforming the finishing layer 2 comprising at least one thermoplastic polymer,
- a second article 12 with a second adhesion surface 12a, which is contoured to substantially match the first adhesion surface 11a and is provided by thermoforming the reinforcement layer 4 comprising a composite material that comprises a thermoplastic matrix in which reinforcement fibers are dispersed, and
- the adhesive material 3 interposed between the first and the second adhesion surface 11a and 12a and adapted to penetrate the surface irregularities of the first and/or the second adhesion surface 11a and 12a.

If envisaged, the second article 12 also comprises the at least one unidirectional ribbon 5 and the at least one layer of non-woven fabric 6.

The processing method for providing the component 10 can comprise the following steps:
- providing the first article 11 which has the first adhesion surface 11a and is provided by thermoforming the finishing layer 2 comprising at least one thermoplastic polymer;
- providing the second article 12 which has the second adhesion surface 12a, which is contoured to substantially match the first adhesion surface 11a and is provided by thermoforming the reinforcement layer 4 which comprises a composite material that comprises a thermoplastic matrix in which reinforcement fibers are dispersed,
- coupling the first and the second article 11 and 12 by rendering the first and the second adhesion surface 11a and 12a adherent by interposition of the adhesive material 3 which is adapted to penetrate the surface irregularities of the first and/or of the second adhesion surface 11a and 12a so as to obtain a semi-finished component,
- clamping the semi-finished component for the stable adhesion of the first and of the second article 11 and 12 so as to obtain a structural component 10.

Alternatively, the processing method for providing the component 10 can comprise the following steps:
- providing the first article 11 which has the first adhesion surface 11a and is provided by thermoforming the finishing layer 2 comprising at least one thermoplastic polymer;
- providing the reinforcement layer 4 comprising a composite material that comprises a thermoplastic matrix in which reinforcement fibers are dispersed;
- coupling the first article 11 and the reinforcement layer 4 with the first adhesion surface 11a and the rear surface facing each other, by interposition of the adhesive material 3 adapted to penetrate the surface irregularities of the first adhesion surface 11a and of the rear surface of the reinforcement layer 4, inside a tool fitted with a punch which is contoured substantially complementary to the first adhesion surface 11a in contact with the reinforcement layer 4, the reinforcement layer 4 assuming the shape structure of the second article 12 provided with the second adhesion surface 12a which is contoured to substantially match the first adhesion surface 11a so as to obtain a semi-finished component;
- thermoforming the semi-finished component inside the tool for the stable adhesion of the first and of the second article 11 and 12 so as to obtain a structural component 10.

The step of providing the first article 11 can involve performing a preliminary processing of the first adhesion surface 11a in order to increase its surface roughness, for example by means of flaming, plasma treatment, or abrasion.

The steps described above can be performed with conventional technologies and do not require special equipment, apart from conventional tools for forming the first and the second article 11 and 12 and for clamping/thermoforming the semi-finished component.

In practice it has been found that the invention fully achieves the intended aim and objects by providing a multilayer material, a structural component obtainable with it, and a related processing method that makes it possible to obtain structural components that are lightweight and offer good mechanical strength characteristics, are recyclable and have reduced environmental impact, and that can be processed quickly and at low cost.

The invention thus conceived is susceptible of numerous modifications and variations, all of which are within the scope of the appended claims. Moreover, all the details may be substituted by other, technically equivalent elements.

In practice, the materials used, as well as the contingent shapes and dimensions, may be any according to the requirements and to the state of the art.

The disclosures in Italian Patent Application No. 102024000028803 from which this application claims priority are incorporated herein by reference.

Where technical features mentioned in any claim are followed by reference signs, such reference signs have been inserted for the sole purpose of increasing the intelligibility of the claims and accordingly such reference signs do not have any limiting effect on the interpretation of each element identified by way of example by such reference signs.

## Claims

1. A multilayer material (1) for the provision of structural cladding/covering components for machines, apparatuses and vehicles, **characterized in that** it comprises a finishing layer (2) comprising at least one thermoplastic polymer associated by interposition of an adhesive material (3) with a reinforcement layer (4) made of composite material comprising a thermoplastic matrix in which reinforcement fibers are dispersed, the adhesive material being adapted to penetrate the surface irregularities of the reinforcement layer (4) and/or of the finishing layer (2).

2. The material (1) according to claim 1, **characterized in that** said at least one thermoplastic polymer is selected from the group comprising acrylonitrile butadiene styrene (ABS), polymethylmethacrylate (PMMA), polycarbonate (PC), or polypropylene (PP).

3. The material (1) according to claim 1, **characterized in that** said thermoplastic matrix comprises at least one of polypropylene (PP), polycarbonate (PC) or polyamide (PA).

4. The material (1) according to claim 1, **characterized in that** said reinforcement fibers are selected from the group comprising glass fibers, flax fibers, natural fibers.

5. The material (1) according to one or more of the preceding claims, **characterized in that** it comprises at least one unidirectional ribbon (5) associated with said reinforcement layer (4).

6. The material (1) according to one or more of the preceding claims, **characterized in that** said reinforcement layer (4) is contoured to form a plurality of ribs (7) on the opposite side with respect to said finishing layer (2).

7. The material (1) according to one or more of the preceding claims, **characterized in that** said finishing layer (2) comprises a rear surface adapted to be associated with said reinforcement layer (4) by the interposition of said adhesive material (3), the rear surface having undergone a preliminary processing adapted to increase its surface roughness.

8. A structural cladding/covering component (10) for machines, apparatuses and vehicles comprising:
- a first article (11) which has a first adhesion surface (11a) and is provided by thermoforming a finishing layer (2) that comprises at least one thermoplastic polymer,
- a second article (12) with a second adhesion surface (12a), which is contoured to substantially match said first adhesion surface (11a) and is provided by thermoforming a reinforcement layer (4) that comprises a composite material that comprises a thermoplastic matrix in which reinforcement fibers are dispersed, and
- adhesive material (3) interposed between said first and said second adhesion surface (11a, 12a) and adapted to penetrate the surface irregularities of the first and/or the second adhesion surface (11a, 12a).

9. The component (10) according to claim 8, **characterized in that** said at least one thermoplastic polymer is selected from the group comprising acrylonitrile butadiene styrene (ABS), polymethylmethacrylate (PMMA), polycarbonate (PC), or polypropylene (PP).

10. The component (10) according to claim 8, **characterized in that** said thermoplastic matrix comprises at least one of polypropylene (PP), polycarbonate (PC) or polyamide (PA).

11. The component (10) according to claim 8, **characterized in that** said reinforcement fibers are selected from the group comprising glass fibers, flax fibers, natural fibers.

12. The component (10) according to one or more of claims 8-11, **characterized in that** said second article (12) comprises at least one unidirectional ribbon (5).

13. The component (10) according to one or more of claims 8-12, **characterized in that** said second article (12) is contoured to form a plurality of ribs (7) protruding from the opposite side of said first article (11).

14. A processing method for obtaining a structural cladding/covering component (10) for machines, apparatuses and vehicles, **characterized in that** it comprises the following steps:
- providing a first article (11) which has a first adhesion surface (11a) and is provided by thermoforming a finishing layer (2) that comprises at least one thermoplastic polymer,
- providing a second article (12) with a second adhesion surface (12a), which is contoured to substantially match said first adhesion surface (11a) and is provided by thermoforming a reinforcement layer (4) that comprises a composite material that comprises a thermoplastic matrix in which reinforcement fibers are dispersed,
- coupling said first and said second article (11, 12) by rendering said first and said second adhesion surface (11a, 12a) adherent by interposition of an adhesive material (3) adapted to penetrate the surface irregularities of the first and/or of the second adhesion surface (11a, 12a) so as to obtain a semi-finished component,
- clamping said semi-finished component for the stable adhesion of said first and said second article (11, 12) so as to obtain a structural cladding/covering component (10).

15. A processing method for obtaining a structural cladding/covering component (10) for machines, apparatuses and vehicles, **characterized in that** it comprises the following steps:
- providing a first article (11) which has a first adhesion surface (11a) and is provided by thermoforming a finishing layer (2) that comprises at least one thermoplastic polymer;
- providing a reinforcement layer (4) which comprises a composite material that comprises a thermoplastic matrix in which reinforcement fibers are dispersed;
- coupling said first article (11) and said reinforcement layer (4), with said first adhesion surface (11a) and a rear surface of said layer facing each other, by interposition of an adhesive material (3) adapted to penetrate the surface irregularities of said first adhesion surface (11a) and/or of the rear surface of said reinforcement layer (4), inside a tool fitted with a punch which is contoured substantially complementary to said first adhesion surface (11a) in contact with said reinforcement layer (4), the reinforcement layer (4) assuming the shape structure of a second article (12) provided with a second adhesion surface (12a) which is contoured to substantially match the first adhesion surface (11a) so as to obtain a semi-finished component;
- thermoforming said semi-finished component inside said tool for the stable adhesion of said first and of said second article (11, 12) so as to obtain a structural cladding/covering component (10).
